# EUROPEAN PATENT SPECIFICATION

(11) **EP 1 375 912 B1**
(45) Date of publication and mention of the grant of the patent: **04.06.2008**
(21) Application number: 02380136.8
(22) Date of filing: 28.06.2002
(51) Int. Cl.: F03D 9/00, F03B 13/18

(54) **Marine platform for wind and wave power conversion**
Meeresplattform für Wind/Wellen-Energieumwandlung
Plate-forme marine pour la conversion de l'énergie du vent et des vagues

(43) Date of publication of application: 02.01.2004
(73) Proprietor: Inmobiliaria Mr, S.A., 31591 Corella (Navarra) (ES)
(72) Inventor: Lazaro Monreal, Miguel, 31592 Corella, (Navarra) (ES)
(74) Representative: Esteban Perez-Serrano, Maria Isabel

(56) References cited:
- DE-A- 2 907 422
- DE-A- 3 419 565
- DE-U- 20 117 211
- FR-A- 2 422 048
- GB-A- 2 031 527

## Description

The present invention relates to a marine platform meant to generate power from wind, waves and tides.

This platform is characterised by the joint use of a hydraulic-drive aerogenerator placed in the centre of the platform and an additional power source based on using the motion of the water.

It is characterised by using double-action hydraulic cylinders that operate as hydraulic impulsion means for using the energy obtained from the motion of the water.

It is characterised by an arrangement of these hydraulic cylinders on the four corners, where the impulsion is communicated by rockers joined to independent foundations connected by pillars.

It is characterised by a second arrangement of these hydraulic cylinders connected on their submerged part to independent foundations by a chain and with the initial position restored by counterweights.

It is characterised by a third arrangement of these hydraulic cylinders on the corners without rockers and supported by pillars.

It is characterised by a fourth arrangement of these double action hydraulic cylinders pulled by the chains that support the platform in its submerged part and with recovery by counterweights.

In all cases, it presents a central cabin under the aerogenerator that receives the hydraulic fluid impelled by the various means for energy collection for its transformation into electrical power by an electricity generator.

### BACKGROUND OF THE INVENTION

Marine platforms are known that are anchored to the sea bed in order to operate with diverse purposes.

One widespread type of marine platform is that used by oil extraction platforms.

Several Patents have been awarded describing their structure, foundation and anchoring, or the procedures for constructing said platforms.

The patent with publication number ES8502191 describes an oscillating marine platform, particularly for oil extraction installations, comprising a bridge and a concrete base with a special arrangement of struts and structural elements characterised by their particular arrangement.

In addition, the patent with publication number ES454039 describes a marine platform for power generation in which the energy of waves is used by means of a buoy that floats or that is attached to the sea bed, plus a set of buoys free to move up and down with the waves that cause the displacement of hydraulic cylinders which run inside cylinders and act as air impulsion pumps to a common manifold.

The impelled air is turbined to drive a generator.

The present invention discloses a platform with several configurations that combine the use of wind power and wave motion, with an aerogenerator used for the former and double action hydraulic cylinders used for the second.

The fluid impelled by each device converges in a common hydraulic generator.

it is known from the State of the Art a marine power generation system as the one disclosed in DE 201 17 211 which is based on using a platform firmly fixed to the seabed, wherein some hydraulic cylinders are used for pumping water into a chamber, placed upwardly over the sea, from where the water once it is released form the chambers it moves a turbine connected with a power generator. Now in the present application is sought to take advantage of the three dimensional movement of the waves using a mobile platform in which some hydraulic cylinders are mounted, being the casing of the hydraulic cylinders joint to the mobile platform and the other part of the hydraulic cylinders being joint to the seabed.

### DESCRIPTION OF THE INVENTION

The present invention relates to a marine platform for power generation.

This platform has a square outline and is provided with a central base for the cabin that houses the electricity generator, the auxiliary and control systems, and the support of the aerogenerator that is placed inside the cabin.

This aerogenerator is provided with a blade passage control for adjustment depending on the speed of the wind.

The rotation of the blades drives a hydraulic pump that sends a pressurised liquid to the cabin that is on the base.

At the cabin also arrives the pressurised liquid from the hydraulic cylinders that work together with the aerogenerator.

The hydraulic cylinder collect the power provided by the relative motion of the platform and the anchoring to the sea bed, according to each scheme of the invention.

These hydraulic cylinder couple two points with a relative displacement to each other due to the waves and, when applicable, to tide fluctuations.

This relative displacement between the two points that are alternately brought closer and separated makes each hydraulic cylinder impel the pressurised fluid towards the cabin located beneath the aerogenerator, thereby constituting an additional energy input.

After the pressurised fluid enters the cabin it is driven towards a hydraulic generator that transforms the pressure energy into electrical power.

This electrical power is then conducted to the shore by suitable conductors that collect power from various platforms that can form the generator unit.

The invention considers four possible cases for the arrangement of the hydraulic cylinder in this same invention in order to use the oscillations of the platform with respect to the sea bed.

The first places a hydraulic cylinder on each corner in a vertical position and impelled by the end of a rocker.

The other end pivots about the corner of the platform, and the end of the pillar with respect to which the oscillations are produced rests on an intermediate point.

Before the end of the pillar is connected to the rocker an automatic tide regulator is installed that allows a constant adjustment of the height of the pillar throughout the day, so that only the waves are used for power generation.

This automatic tide regulator is simply an engine placed inside a frame that acts by extending the pillars with the thread that joins said frame.

The oscillations of the end of the rocker cause a rocking motion that impels a pressurised fluid by means of the double action cylinder in both its positive and negative displacement.

The oscillations due to the arc described by the end of the rocker are absorbed by a ball joint or cylindrical joint that connects the lower part of the cylinder and the platform.

The second arrangement is based on the first one, except that instead of pillars working under a compression load, chains are used that work under a tensile stress.

For this reason, they are placed on the other end of the point about which the rocker pivots; that is, projecting beyond the corner of the platform, so that it is at this end point where the chain connects the rocker to the foundation to the sea bed.

Interposed in the chain is the tide regulator that adjusts the length between its ends as a function of the tide.

When the platform rises, the chain pulls to make the hydraulic cylinder work under a tensile stress, while when the platform descends again the hydraulic cylinder is compressed by a counterweight placed on the inner end.

The third embodiment of this invention eliminates the counterweights and includes four rigid pillars as the anchoring means.

Each of these pillars has a lower ball joint and is directly attached on the top to the double action hydraulic cylinder.

The height oscillations of the platform are transformed into displacements in either sense of the hydraulic cylinder.

These displacements impel the pressurised fluid that together with the pressurised fluid arriving from the aerogenerator is driven to the cabin with the common generator, as occurs in all cases.

The last alternative for the invention alters the position about which pivots the connecting rod that transmits the platform oscillations to the impulsion hydraulic cylinder.

This embodiment includes a central support on which the connecting rod pivots, so that on its external end it is connected to one side of the hydraulic cylinder and on its other end it is connected to a recovering counterweight.

The counterweight provides a constant tensile stress, so that it is the hydraulic cylinder casing that is joined to the platform and moves up and down.

The relative motion between the case and the hydraulic cylinder causes an alternate positive and negative displacement that impels the pressurised fluid.

Common to the first two embodiments of this invention is the use of tide regulators that consist of engines that act on a thread provided on its frame, thereby changing the distance between its ends.

This tide regulator is interposed in either the anchoring chains or the rigid pillars, as the case may be, so that the to and fro motion caused by the waves is always about a central position of the double action hydraulic cylinder.

### DESCRIPTION OF THE DRAWINGS

The present description is complemented by a set of drawings provided for purposes of illustration of the preferred example and in a non-limiting manner.

Figure 1 is a sectional elevation and plan view of the first embodiment of the invention.

Figure 2 is a view of the section at 45 DEG projected onto the elevation of one of the rockers and the mode of operation according to the second embodiment.

Figure 3 is a view of the section at 45 DEG projected onto the elevation of one of the rockers and the mode of operation according to the third embodiment.

Figure 4 is a view of the section at 45 DEG projected onto the elevation of one of the rockers and the mode of operation according to the fourth embodiment.

Figure 5 is a section of the double action hydraulic cylinder with the inlet and outlet valves on either side of the hydraulic cylinder.

Figure 6 is a plan view of the cabin that houses the generator, the transformers and the control means.

### PREFERRED EMBODIMENT OF THE INVENTION

In view of the above, the present invention relates to a marine platform for power generation, with a quadrangular configuration based on the joint use of an aerogenerator and double action hydraulic cylinders in its four corners in order to obtain power from oscillations due to waves and tides.

This second power source admits various configurations and position of the double action hydraulic cylinder, so that four preferred embodiments are described for this invention relating to four possible arrangements for the hydraulic cylinders.

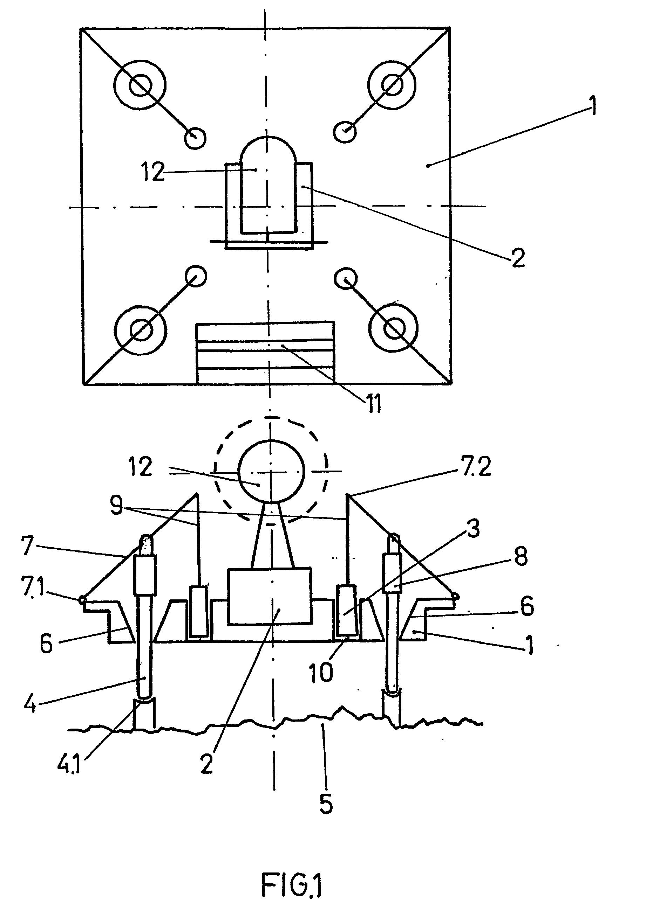

Figure 1, although it shows the first preferred embodiment, includes the various essential elements of the invention that are common to all the embodiments.

Common to all the embodiments is the quadrangular structure of the platform (1), which has a central opening on which is installed the cabin (2) that houses the generator (2.1), the hydraulic engine (2.2) that controls the tide regulators, the transformer (2.3) and an emergency unit (2.4), as well as the control means.

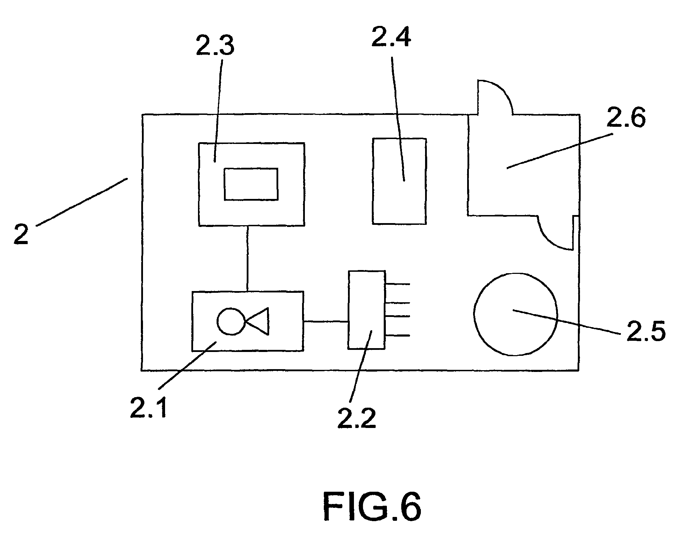

All of said elements are shown in figure 6, as is the emergency exit (2.5) located on the roof and separated from the main entrance (2.6).

From the centre of the platform and passing through the centre of the cabin (2) is placed an aerogenerator (12) that uses the wind to impel a pressurised fluid that is driven to the generator (2.1) provided inside the cabin.

The presence of said generator (2.1) in the central area also implies that the variable wind forces cause oscillations of the platform, allowing to increase the efficiency of the energy recovery means provided in the form of hydraulic pistons.

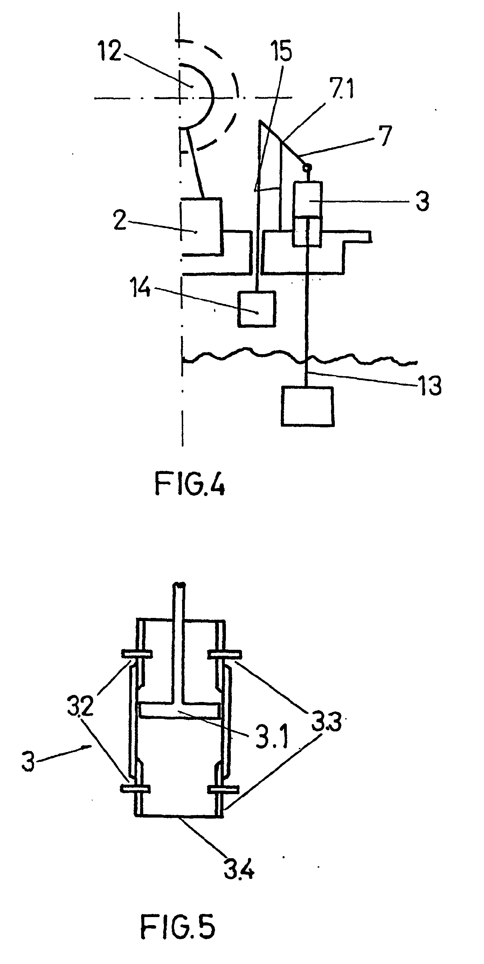

Figure 5 shows a detail of a double action hydraulic cylinder (3) consisting of a casing (3.4) with a single inlet (as shown in the figure) or a double inlet (in the case of traction from both sides), a central piston (3.1) with a limited run and inlet valves (3.2) and outlet valves (3.3) on either side of the piston (3.1).

When the piston (3.1) rises the inlet valve (3.2) of the lower side opens to allow fluid to enter, and the outlet valve (3.3) of the upper cavity opens to allow the impelled pressurised fluid to exit.

The other valves remain closed; as the displacement sense of the piston (3.1) is inverted the valves that were closed will open and the ones that were open will close, allowing to fill the upper cavity and so that the lower cavity is the impelling one.

This double action hydraulic cylinder (3) is in charge of transforming the energy from the oscillations of the platform caused by the waves into mechanical energy transmitted by a pressurised fluid.

The form of arranging and operating said hydraulic cylinders define four possible embodiments of the same invention.

### First embodiment:

In this embodiment the platform is anchored to the sea bed (5) by four rigid pillars (4) with a play (4.1) in their lower area to allow arc oscillations with respect to said lower point.

The four pillars (4) coincide with four orifices (6) placed along the diagonals and near each of the four corners.

The pillars (4) rise above the platform (1), passing through these orifices (6) until reaching an intermediate point of an oblique connecting rod (7) that pivots about its end (7.1) fixed to the corner of the platform (1).

Between the connecting rod (7) and the pillar (4) is an interposed motorised regulator (8) that changes the distance between its ends according to the tide.

The engine of said motorised regulator is the hydraulic engine (2.2) placed in the central cabin (2).

Variations in the height of platform (1) due to the waves create a to and fro motion of the free end (7.2) of the connecting rod on the internal side.

This end (7.2) is connected by a rigid rod (9) with the top end of the double action hydraulic cylinder (3).

The other free end is attached by a non-rigid union (10) to the platform.

The oscillations of platform (1) cause a to and fro motion of the end (7.2) of the connecting rod (7), so that they drive the double action hydraulic cylinder (3) in both directions.

The platform (1) will move vertically at each of its corners along with the waves, resulting in upwards and downwards movements as well as inclinations.

Any of these movements are oscillatory at each corner, and the four hydraulic cylinder need not have a synchronised motion; however, the impulsion will take place when the hydraulic cylinder (3) moves both in a positive sense and in the opposite one.

This situation is common to the other three embodiments.

### Second embodiment:

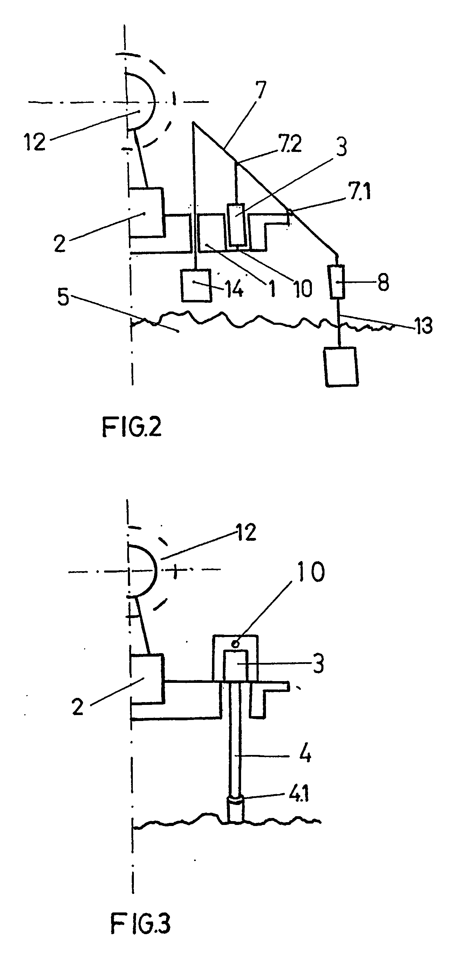

This second embodiment is shown in figure 2, where only a diagonal section of the platform (1) is shown with the changes made with respect to the first embodiment.

In this embodiment there are no pillars; instead, the platform is secured to the sea bed (5) by chains (13).

The chains (13) operate under tensile stress, so that a means is required to restore the position of the connecting rod (7), achieved by a counterweight (14).

As the chain (13) works under tensile stress the connecting rods (7) extend beyond the point of attachment (7.1) to the platform (1), and it is in this end where the chain (13) is connected and where the tensile force is exerted when the platform (1) rises.

When the platform (1) descends the counterweight (14) placed on the opposite side exerts the required force in the opposite sense, as it pulls on the other end.

The rocking motion is transmitted to the hydraulic cylinder (3) at a point (7.2) that is internal and intermediate between the attachment point (7.1) to the platform (1) and the inner end where the counterweight (14) is attached.

The chain (13) used for anchoring to the sea bed (5) is also provided with an interposed tide regulator.

### Third embodiment:

In this third embodiment of the invention, shown in figure 3, the connecting rods are eliminated and rigid pillars (4) are connected directly to the hydraulic cylinders (3).

The pillars (4) have a lower play (4.1) that allows absorbing sideways vibrations.

The ends of said pillars (4) are coupled directly to the corresponding piston (3.1) of the hydraulic cylinder, which is located under a cavity provided for such purpose.

The other end of the hydraulic cylinder (3) is attached to the platform (10) in an over elevated position that separates it from the surface of the water.

### Fourth embodiment:

This embodiment, shown in figure 4, as the second one, employs chains (13) and counterweights (14).

In this case, the connecting rod (7) pivots about a central point (7.1) that is not on the end of the platform (1) but instead is on an attachment post (15).

On the inner side of the platform (1) and on the end of the connecting rod (7) hangs the counterweight (14), while the other end of the connecting rod (7) is joined to the hydraulic cylinder (3) that is placed above the platform (1) to facilitate maintenance tasks.

Unlike the other embodiments, here the piston (3.1) is not accessible from only one side with the casing (3.4) determining the attachment on the other side, but is instead accessible form both sides and the casing (3.4) is attached to the platform (1).

In this manner, tension in one sense is provided by traction of the chain (13) joined to the piston (3.1) on that side, and tension in the opposite sense is provided by traction of the connecting rod (7) joined to the same piston (3.1) accessed from the other side.

The lower side of the piston (3.1) is connected to the chain (13) for anchoring to the sea bed (5), while the top side of the piston (3.1) is connected to the connecting rod at the point (7.1).

When the platform (1) rises the chain (13) for anchoring to the platform (1) pulls on the piston (3.1) of the hydraulic cylinder (3), and when the platform (1) descends the tension due to the counterweight (14) pulls on the piston (3.1) in the opposite sense, always with respect to a casing (3.4) of the hydraulic cylinder (3) that is joined to the platform (1).

In any embodiment the pressurised fluid arriving from the aerogenerator (12) and the four hydraulic cylinders (3) is routed towards the cabin (2) containing the hydraulic generator.

This energy is later transformed suitably by the transformer (2.3) so that it can be taken to the shore by a line that can communicate more than one platform to the collection centre on land.

The essence of this invention is not affected by changes in the materials, shape, size and arrangement of its component elements, which are described in a non-limiting manner, so that an expert in the field should be capable of reproducing it.

## Claims

1. Marine platform for power generation, form among platforms that may be installed at sea to use waves for generating power, comprising a platform (1), incorporating a cabin (2) in a centred position of its top surface that houses a hydraulic generator (2.1), a hydraulic engine (2.2), and the transformer (2.3), as well as an emergency automatic power unit (4.4) and control systems; on top of said cabin (2) and also in a centred position is an elevated aerogenerator (12), vertically arranged hydraulic cylinders (3) , driven by the rocking motion resulting from the oscillations in height with respect of the sea bed (5) caused by the waves, with these hydraulic cylinders (3) having a casing (3.4) that houses a piston (3.1) defining two cavities, each of which has two valves, an inlet valve (3.2) and an outlet valve (3.3)
**characterized in that**
- the platform (1) is a floating platform anchored to the seabed (5) through pillars (4) with pass trough orifices (6) carried out in the platform (1);
- the aerogenerator (12) transforms the wind energy into mechanical energy driving a hydraulic pump that sends a pressurised liquid to the cabin wherein it also arrives the pressurised liquid from the hydraulic cylinders (3) which acts in either sense of displacement;
- and where in addition the anchoring means include a tide regulator (8) that consists of a motor driven by the hydraulic engine (2.2) that acts on the threaded housing which protects the motor, changing the distance between its ends according to the tidal levels.

2. Marine platform for power generation according to claim 1, **characterised in that** each double action hydraulic cylinder (3) has one end attached to the piston (3.1) and the other end attached to the casing (3.4), so that one end is joined to the platform (1) by a union (10) that can rotate and the other end is joined to the inner end (7.2) of an impulsion connecting rod (7) that pivots about the corner (7.1) of the platform (1) and that is driven from an intermediate point in which is placed the jointed union of the end of a pillar (4) meant to anchor the platform (1) to the sea bed (5); this pillar (4) is provided in an intermediate part with a tide regulator (8), while its top part rests on the foundations through a ball-joint or rotational support (4.1); each of the four units formed mainly by the pillar (4) cross the platform through an orifice (6) in order to reach the four connecting rods (7) with the same arrangement as the diagonal lines.

3. Marine platform for power generation according to claim 1, **characterised in that** the drive mechanism of the double action hydraulic cylinders (3) has one end attached to the piston (3.1) and the other end attached to the casing (3.4), so that one end is joined to the platform (1) by means of a union (10) that can rotate and the other end placed above is joined to an intermediate point (7.2) of a connecting rod (7) for impulsion between the point about which it pivots located on the corner (7.1) of the platform (1) and the inner end of the connecting rod (7) from which the recovery counterweight hangs, and on the other end, the outer end, said connecting rod (7) extends beyond the point (7.1) about which it pivots in order to reach the chain (13) by which it is secured to the sea bed (5) with the interposed tide regulator (8); so that this chain pulls on the hydraulic cylinder (3) as the platform (1) rises and the counterweight (14) compresses and restores said hydraulic cylinder.

4. Marine platform for power generation according to claim 1, **characterised in that** the drive mechanism of the double action hydraulic cylinders (3) has one end attached to the piston (3.1) and the other end attached to the casing (3.4), so that one end placed above is joined to the platform (1) by a union (10) that can rotate and the other end placed below is joined to a pillar (4) that rests on the foundation on the sea bed by means of a ball joint support (4.1), wherein the variations in height of the platform translate into variations in the distance between the ends of the hydraulic cylinders (3), with the resulting impulsion of pressurised fluid to drive the generator (2.1).

5. Marine platform for power generation according to claim 1, **characterised in that** the drive mechanism of the double action hydraulic cylinders (3) has both ends joined to the piston (3.1), and the casing (3.4) is joined to the platform (1) so that the lower end of the hydraulic cylinder is attached to the chain (13) for anchoring to the sea bed (5), wherein said cylinder will be pulled when the platform (1) rises, and where the traction on the top part that allows to restore the initial position of the hydraulic cylinder (3) is provided by a rocker (7) that has one end joined to the hydraulic cylinder on its top end and the other to a recovering counterweight (14) placed on the inner part, so that it can pivot about an intermediate point (7.1) that is reached by a support post (15).

## Patentansprüche

1. Eine Meeresplattform zur Stromerzeugung, unter den Plattformen, die im Meer installiert werden können, um Wellen zur Erzeugung von Strom zu verwenden, die eine Plattform (1), die eine Kabine (2) in einer zentrierten Position ihrer oberen Oberfläche einschließt, in der ein hydraulischer Generator (2.1), ein Hydraulikmotor (2.2) und der Transformator (2.3) aufgenommen sind, sowie ein automatisches Notstromaggregat (4.4) und Steuersystem einschließt; oben auf der besagten Kabine (2) und ebenfalls in einer zentrierten Position befindet sich ein erhöhter Windgenerator (12), vertikal angeordnete Hydraulikzylinder (3), die von der Schaukelbewegung angetrieben werden, die aus den seitens der Wellen hervorgerufenen Höhenschwankungen gegenüber dem Meeresboden (5) resultieren, wobei diese Hydraulikzylinder (3) über ein Gehäuse (3.4) verfügen, in dem ein Kolben (3.1) aufgenommen ist, der zwei Hohlräume definiert, von denen jeder einzelne zwei Ventile besitzt, ein Einlassventil (3.2) und ein Auslassventil (3.3),
**dadurch gekennzeichnet, dass**
- die Plattform (1) eine schwimmende Plattform ist, die mit dem Meeresboden (5) mittels Pfeilern (4) verankert ist, die durch in der Plattform (1) durchgeführte Öffnungen (6) laufen;
- der Windgenerator (12) die Windenergie in mechanische Energie umwandelt, die eine Hydraulikpumpe antreibt, die eine Druckflüssigkeit an die Kabine sendet, worin ebenfalls die Druckflüssigkeit von den Hydraulikzylindern (3) gelangt, die in jeder Verschieberichtung arbeiten;
- und bei der die Verankerungsmittel zusätzlich einen Gezeitenregler (8) einschließen, der aus einem von einem Hydraulikmotor (2.2) angetriebenen Motor besteht, der auf das Gewindegehäuse einwirkt, das den Motor schützt, wobei der Abstand zu dessen Enden entsprechend den Gezeitenpegeln geändert wird.

2. Eine Meeresplattform zur Stromerzeugung nach Anspruch 1, **dadurch gekennzeichnet, dass** jeder doppelt wirkende Hydraulikzylinder (3) ein Ende an dem Kolben (3.1) und das andere Ende an dem Gehäuse (3.4) befestigt hat, so dass ein Ende mittels einer Verbindung (10) mit der Plattform (1) verbunden ist, die rotieren kann, und das andere Ende ist mit dem inneren Ende (7.2) einer Antriebs-Kurbelstange (7) verbunden, die um die Ecke (7.1) der Plattform (1) drehbar gelagert ist und die von einem Zwischenpunkt aus angetrieben wird, in dem die Gelenkverbindung des Endes eines Pfeilers (4) zur Verankerung der Plattform (1) an dem Meeresboden (5) platziert ist; dieser Pfeiler (4) ist an einem mittleren Teil mit einem Gezeitenregler (8) ausgestattet, während dessen oberer Teil durch ein Kugelgelenk oder eine Rotationsauflage (4.1) auf der Pfeilergründung ruht; jede der vier hauptsächlich von dem Pfeiler (4) gebildeten Einheiten durchkreuzt die Plattform durch eine Öffnung (6), um die vier Kurbelstangen (7) mit derselben Anordnung wie die diagonalen Linien zu erreichen.

3. Eine Meeresplattform zur Stromerzeugung nach Anspruch 1, **dadurch gekennzeichnet, dass** der Antriebsmechanismus der doppelt wirkenden Hydraulikzylinder (3) ein Ende an dem Kolben (3.1) befestigt und das andere Ende an dem Gehäuse (3.4) befestigt hat, so dass ein Ende mit der Plattform (1) mittels einer Verbindung (10) verbunden ist, die rotieren kann, und das andere darüber platzierte Ende ist mit einem Zwischenpunkt (7.2) einer Kurbelstange (7) verbunden, zum Antrieb zwischen dem Punkt, um den sie drehbar auf der Ecke (7.1) der Plattform (1) liegend gelagert ist, und dem inneren Ende der Kurbelstange (7), von dem das Ausgleichs-Gegengewicht hängt, und an dem anderen Ende, dem äußeren Ende, erstreckt sich die besagte Kurbelstange (7) über den Punkt (7.1) hinaus, um den sie drehbar gelagert ist, um die Kette (13) zu erreichen, mittels der sie an dem Meeresboden (5) mit dem Gezeitenregler (8) gesichert ist; so dass diese Kette an dem Hydraulikzylinder (3) zieht, wenn die Plattform (1) angehoben wird und das Gegengewicht (14) den besagten Hydraulikzylinder komprimiert und zurück setzt.

4. Eine Meeresplattform zur Stromerzeugung nach Anspruch 1, **dadurch gekennzeichnet, dass** der Antriebsmechanismus der doppelt wirkenden Hydraulikzylinder (3) ein Ende an dem Kolben (3.1) befestigt und das andere Ende an dem Gehäuse (3.4) befestigt hat, so dass ein darüber platziertes Ende mit der Plattform (1) mittels einer Verbindung (10) verbunden ist, die rotieren kann, und das andere darunter platzierte Ende ist mit einem Pfeiler (4) verbunden, der durch eine Kugelgelenkauflage (4.1) auf der Pfeilergründung auf dem Meeresboden ruht, wobei die Höhenschwankungen der Plattform in Schwankungen des Abstands zwischen den Enden der Hydraulikzylinder (3) umgewandelt werden, mit dem daraus resultierenden Antrieb der Druckflüssigkeit zum Antrieb des Generators (2.1).

5. Eine Meeresplattform zur Stromerzeugung nach Anspruch 1, **dadurch gekennzeichnet, dass** der Antriebsmechanismus der doppelt wirkenden Hydraulikzylinder (3) beide Enden an dem Kolben (3.1) befestigt hat, und dass das Gehäuse (3.4) mit der Plattform (1) verbunden ist, so dass das untere Ende des Hydraulikzylinders an der Kette (13) zur Verankerung mit dem Meeresboden (5) befestigt ist, wobei an dem besagte Zylinder gezogen wird, wenn sich die Plattform (1) anhebt, und wobei die Zugkraft gegenüber dem oberen Teil, die es erlaubt, die ursprüngliche Position des Hydraulikzylinders (3) wiederherzustellen, von einem Kipphebel (7) zur Verfügung gestellt wird, der ein Ende mit dem oberen Ende des Hydraulikzylinders und das andere mit einem auf dem inneren Teil platzierten Ausgleichs-Gegengewicht (14) verbunden hat, so dass er drehbar um einen Zwischenpunkt (7.1) gelagert ist, der von einem Stützpfosten (15) erreicht wird.

## Revendications

1. Plate-forme marine pour production d'électricité, parmi les plates-formes qui peuvent être installées en mer afin d'utiliser les vagues pour produire de l'électricité, comprenant une plate-forme (1), comportant une cabine (2) dans une position centrée de sa surface supérieure qui loge un générateur hydraulique (2.1), un moteur hydraulique (2.2), et le transformateur (2.3), ainsi qu'un groupe générateur automatique de secours (4.4) et des systèmes de contrôle; au-dessus de ladite cabine (2) et également dans une position centrée il y a un aérogénérateur surélevé (12), des vérins hydrauliques disposés verticalement (3), commandés par le mouvement de balancement résultant des oscillations en hauteur par rapport au fond marin (5) provoquées par les vagues, avec ces vérins hydrauliques (3) possédant un boîtier (3.4) qui loge un piston (3.1) définissant deux cavités, dont chacune possède deux vannes, une vanne d'entrée (3.2) et une vanne de sortie (3.3)
**caractérisée en ce que**
- la plate-forme (1) est une plate-forme flottante ancrée sur le fond marin (5) au moyen de piliers (4) avec des orifices de passage (6) réalisés dans la plate-forme (1);
- l'aérogénérateur (12) transforme l'énergie du vent en énergie mécanique commandant une pompe hydraulique qui envoie un liquide sous pression à la cabine dans laquelle arrive aussi le liquide sous pression provenant des vérins hydrauliques (3) qui agit dans les deux sens de déplacement;
- et où les moyens d'ancrage comprennent en outre un régulateur de marée (8) qui est constitué d'un moteur commandé par le moteur hydraulique (2.2) qui agit sur le carter fileté qui protège le moteur, en changeant la distance entre ses extrémités en fonction des niveaux de la marée.

2. Plate-forme marine pour production d'électricité selon la revendication 1, **caractérisée en ce que** chaque vérin hydraulique à double action (3) a une extrémité fixée au piston (3.1) et l'autre extrémité fixée au boîtier (3.4), pour qu'une extrémité soit reliée à la plate-forme (1) par un raccord (10) qui peut tourner et que l'autre extrémité soit reliée à l'extrémité interne (7.2) d'une bielle à impulsion (7) qui pivote autour de l'angle (7.1) de la plate-forme (1) et qui est commandée à partir d'un point intermédiaire où est placé le raccord articulé de l'extrémité d'un pilier (4) destiné à ancrer la plate-forme (1) sur le fond marin (5); ce pilier (4) est constitué d'une partie intermédiaire avec un régulateur de marée (8), tandis que sa partie supérieure s'appuie sur les fondations via un joint à rotule ou un support rotatif (4.1); chacune des quatre unités formées principalement par le pilier (4) traverse la plate-forme via un orifice (6) afin d'atteindre les quatre bielles (7) avec la même disposition que les lignes diagonales.

3. Plate-forme marine pour production d'électricité selon la revendication 1, **caractérisée en ce que** le mécanisme de commande des vérins hydrauliques à double action (3) a une extrémité fixée au piston (3.1) et l'autre extrémité fixée au boîtier (3.4), pour qu'une extrémité soit reliée à la plate-forme (1) au moyen d'un raccord (10) qui peut tourner et que l'autre extrémité placée au-dessus soit reliée à un point intermédiaire (7.2) d'une bielle (7) pour l'impulsion entre le point autour duquel elle pivote sur l'angle (7.1) de la plate-forme (1) et l'extrémité interne de la bielle (7) à laquelle le contrepoids de rétablissement est accroché, et sur l'autre extrémité, l'extrémité externe, ladite bielle (7) se prolonge au-delà du point (7.1) autour duquel elle pivote afin d'atteindre la chaîne (13) par laquelle elle est retenue au fond marin (5) avec le régulateur de marée (8) interposé; pour que cette chaîne tire sur le vérin hydraulique (3) lorsque la plate-forme (1) s'élève et que le contrepoids (14) compresse et restaure ledit vérin hydraulique.

4. Plate-forme marine pour production d'électricité selon la revendication 1, **caractérisée en ce que** le mécanisme de commande des vérins hydrauliques à double action (3) a une extrémité fixée au piston (3.1) et l'autre extrémité fixée au boîtier (3.4), pour qu'une extrémité placée au-dessus soit reliée à la plate-forme (1) par un raccord (10) qui peut tourner et que l'autre extrémité placée en dessous soit reliée à un pilier (4) qui s'appuie sur les fondations sur le fond marin au moyen d'un support de joint à rotule (4.1), où les variations en hauteur de la plate-forme se traduisent en variations dans la distance entre les extrémités des vérins hydrauliques (3), avec l'impulsion de fluide sous pression qui en résulte pour commander le générateur (2.1).

5. Plate-forme marine pour production d'électricité selon la revendication 1, **caractérisée en ce que** le mécanisme de commande des vérins hydrauliques à double action (3) a les deux extrémités reliées au piston (3.1), et le boîtier (3.4) est relié à la plate-forme (1) pour que l'extrémité inférieure du vérin hydraulique soit fixée à la chaîne (13) pour l'ancrage sur le fond marin (5), où ledit vérin sera tiré lorsque la plate-forme (1) s'élèvera, et où la traction sur la partie supérieure qui permet de restaurer la position initiale du vérin hydraulique (3) est assurée par un balancier (7) qui a une extrémité reliée au vérin hydraulique sur son extrémité supérieure et l'autre à un contrepoids de rétablissement (14) placé sur la partie interne, pour qu'il puisse pivoter autour d'un point intermédiaire (7.1) qui est atteint par un montant de support (15).
